# EUROPÄISCHE PATENTSCHRIFT

(11) **EP 3 619 062 B1**
(45) Veröffentlichungstag und Bekanntmachung des Hinweises auf die Patenterteilung: **24.02.2021**
(21) Anmeldenummer: 18719094.7
(22) Anmeldetag: 12.04.2018
(51) Int. Cl.: B60G 17/015, B60G 17/056, B60G 17/052, F04B 25/00, F04B 41/06, F04B 49/03, F04B 49/22

(54) **VERFAHREN ZUM BETREIBEN EINER DRUCKREGELANLAGE IN EINEM FAHRZEUG SOWIE DRUCKREGELANLAGE**
METHOD FOR OPERATING A PRESSURE-REGULATING SYSTEM IN A VEHICLE AND PRESSURE-REGULATING SYSTEM
PROCÉDÉ PERMETTANT DE FAIRE FONCTIONNER UN SYSTÈME DE RÉGULATION DE LA PRESSION DANS UN VÉHICULE AINSI QUE SYSTÈME DE RÉGULATION DE LA PRESSION

(30) Priorität: 05.05.2017 DE 102017004338
(43) Veröffentlichungstag der Anmeldung: 11.03.2020
(73) Patentinhaber: WABCO GmbH, 30453 Hannover Niedersachsen (DE)
(72) Erfinder: FRANK, Dieter, 30171 Hannover (DE); SCHARPENBERG, Jörg, 30938 Burgwedel (DE); STABENOW, Uwe, 30880 Laatzen (DE)
(74) Vertreter: Rabe, Dirk-Heinrich
(86) Internationale Anmeldenummer: PCT/EP2018/059407
(87) Internationale Veröffentlichungsnummer: WO 2018/202399

(56) Entgegenhaltungen:
- DE-A1-102011 084 921
- DE-A1-102012 005 303
- DE-A1-102012 006 382

## Beschreibung

Die Erfindung betrifft ein Verfahren zum Betreiben einer Druckregelanlage, insbesondere Luftfederanlage in einem Fahrzeug, sowie eine Druckregelanlage zur Durchführung des Verfahrens.

Mehrstufige Kompressoren dienen dazu, eine hohe Verdichtung eines Druckmittels, insbesondere eines Gases, beispielsweise Luft, dadurch zu erreichen, dass das in einer ersten Verdichtungsstufe vorverdichtete Druckmittel in einer darauffolgenden zweiten Verdichtungsstufe zusätzlich verdichtet wird. Es können auch weitere Verdichtungsstufen in einer Kaskade vorhanden sein, in denen jeweils das von der vorhergehenden Verdichtungsstufe verdichtete Druckmittel weiter verdichtet wird.

Sollen Verbraucher beispielsweise einer Luftfederanlage oder einer Niveauregelanlage in einem Fahrzeug mit dem Druckmittel versorgt werden, kann ein derartiger mehrstufiger Kompressor verwendet werden, um das Druckmittel mit einem entsprechenden Druck zum Versorgen von Druckfedern bereitzustellen. Der mehrstufige Kompressor verdichtet dabei das in einen Ansaugraum eingeleitete Druckmittel aus der Atmosphäre über zwei oder mehrere Verdichtungsstufen und überführt das mehrstufig verdichtete Druckmittel an die Druckfedern. Alternativ kann auch ein bereits verdichtetes Druckmittel aus einem Druckmittelvorrat verwendet werden, das durch den mehrstufigen Kompressor ein weiteres Mal verdichtet wird.

Dies ist beispielsweise in DE 10 2008 034 240 B4 beschrieben, wonach eine Niveauregelanlage vorgesehen ist, bei der ein mehrstufiger Kompressor verwendet wird, um das Druckmittel aus der Atmosphäre oder aus einem Druckmittelvorrat zu fördern, wobei zwei Verdichtungsstufen vorgesehen sind. Wird Druckmittel aus der Atmosphäre verdichtet, wird das Druckmittel durch beide Verdichtungsstufen geleitet, während bei einer Förderung des Druckmittels aus dem Druckmittelvorrat eine Verdichtung des dem Verbraucher zugeführten Druckmittels lediglich mit der zweiten Verdichtungsstufe stattfindet. Um in diesem Fall die Verdichtungsarbeit der ersten Verdichtungsstufe zu reduzieren oder zu sperren, ist ein als 2/2-Wegeventil ausgeführtes Sperrventil vorgesehen, das bei einer Förderung aus dem Druckmittelvorrat eine Förderung von verdichtetem Druckmittel aus der ersten Verdichtungsstufe zur zweiten Verdichtungsstufe verhindert. Das Sperrventil wird hierbei elektrisch über eine Steuereinrichtung angesteuert.

Die DE 103 21 771 A1 beschreibt einen mehrstufigen Kompressor, bei dem zur Abschaltung der ersten Verdichtungsstufe eine Bypassleitung mit einem pneumatisch steuerbaren Sperrventil vorgesehen ist, die einen Ansaugraum des Kompressors mit dem ersten Verdichtungsraum verbindet. Das pneumatische Sperrventil wird hierbei in Abhängigkeit des Druckes im Ansaugraum geöffnet, so dass ein Druckausgleich zwischen dem Ansaugraum und dem Verdichtungsraum stattfinden kann. Dies dient dazu, die erste Verdichtungsstufe in Abhängigkeit des Druckes des in den Ansaugraum eingelassenen Druckmittels abzuschalten. Dadurch kann in Abhängigkeit des eingelassenen Druckmittels im einstufigen Betrieb eine hohe Verdichtung bei einem geringen Volumenstrom erreicht werden. Im zweistufigen Betrieb hingegen wird ein hoher Volumenstrom erreicht und das Druckmittel durchströmt zwei Verdichtungsstufen.

Gemäß DE 10 2011 083 614 A1 ist vorgesehen, in einem offenen Betriebsmodus Luft durch zwei Verdichtungsstufen zu verdichten und die verdichtete Luft einem Druckmittelvorrat zuzuführen. In einem geschlossenen Betriebsmodus kann die bereits verdichtete Luft aus dem Druckmittelvorrat in ein Zwischenvolumen zwischen der ersten und der zweiten Verdichtungsstufe eingelassen und durch eine der Verdichtungsstufen erneut verdichtet werden, um anschließend in die Verbraucher zu gelangen. Weiterhin ist auch eine Rückführung von Luft aus den Verbrauchern in den Druckmittelvorrat vorgesehen. Zum Steuern sind elektrisch betätigte Umschaltventile vorgesehen, die entsprechend die Strömungswege für die verdichtete oder die zu verdichtende Luft sperren und freigeben.

DE 10 2012 010 390 A1 beschreibt ein Niveauregelsystem, bei dem in einem geschlossenen Betriebsmodus über einen Kompressor bereits verdichtete Luft aus einem Druckvorratsbehälter in als Federbeine ausgeführte Verbraucher zugeführt wird. Zum Steuern des Druckes im Niveauregelsystem ist eine Druckbegrenzungsfunktion vorgesehen, die entweder in Form eines Ablassventils oder in Form eines Vorsteuerventils ausgestaltet ist, die jeweils bei einem zu hohen Druck im System Luft in die Atmosphäre ablassen.

Die DE102011084921A1, die den Oberbegriff des Anspruchs 1 bzw. 4 zeigt, offenbart eine Kompressorschaltung für eine pneumatische Regelvorrichtung eines Fahrzeugs mit einem Kompressor und einem Druckregler, wobei der Druckregler zwischen einer Eingangsseite des Kompressors und der pneumatischen Regelvorrichtung angeordnet ist. Der Druckregler ist dazu ausgebildet, einen an seiner der pneumatischen Regelvorrichtung zugewandten Seite anliegenden Vordruck von Luft der pneumatischen Regelvorrichtung zu messen und diese Luft mit einem Eingangsdruck der Eingangsseite des Kompressors zuzuführen, wobei der Druckregler dazu ausgebildet ist, den Eingangsdruck in Abhängigkeit des Eingangsdrucks selbst und den jeweils vom Betriebsmodus der pneumatischen Regelvorrichtung abhängigen Druckverhältnissen einzustellen bzw. zu regeln.

Die DE102012006382A1 offenbart eine Druckmittelversorgungsanlage zum Betreiben einer Pneumatikanlage, wobei in einer ersten Druckmittelleitung auf der Eingangsseite einer zweiten Verdichterstufe eine elektrisch nennweitenverstellbare Drossel angeordnet ist.

Die DE102012005303A1 offenbart eine Druckmittelversorgungsanlage zum Betreiben einer Pneumatikanlage, wobei in der Entlüftungsleitung eine pneumatisch verstellbare Drossel angeordnet ist.

Es ist Aufgabe der Erfindung, ein Verfahren bereitzustellen, mit dem eine Druckregelanlage in einem Fahrzeug, insbesondere einem Personenkraftwa-gen, mit einer hohen Zuverlässigkeit betrieben werden kann. Weiterhin ist Aufgabe der Erfindung eine Druckregelanlage zur Durchführung des Verfahrens anzugeben.

Diese Aufgabe wird durch ein Verfahren nach Anspruch 1 sowie eine Druckregelanlage nach Anspruch 4 gelöst. Die Unteransprüche geben vorteilhafte Weiterbildungen an. Erfindungsgemäß wird demnach erkannt, eine Überlastung einer Druckregelanlage, insbesondere Luftfederanlage in einem Fahrzeug, dadurch zu vermeiden, dass eine Leistungsaufnahme eines pneumatischen Verbrauchers der Druckregelanlage, eines ein- oder mehrstufigen Kompressors, während des Betriebs eingestellt wird, indem ein Auflade-Volumenstrom eines dem pneumatischen Verbraucher zugeführten Aufladedruckmittels angepasst wird, wobei die Anpassung stufenlos erfolgen kann. Dies wird erfindungsgemäß dadurch erreicht, dass in Abhängigkeit eines Vordruckes und/oder Vorvolumenstromes, die jeweils die Leistungsaufnahme im Betrieb des pneumatischen Verbrauchers charakterisieren, der Auflade-Volumenstrom stufenlos gedrosselt bzw. begrenzt wird, indem ein auf das dem pneumatischen Verbraucher zugeführte Aufladedruckmittel wirkender Drossel-Querschnitt oder mittlerer Drossel-Querschnitt stufenlos angepasst wird.

Dadurch kann vorteilhafterweise erreicht werden, dass in einem geschlossenen Betriebsmodus der Druckregelanlage, in der das bereits verdichtete Aufladedruckmittel aus einem Druckmittelvorrat oder Druckmittelkammern von beispielsweise Luftfedern erneut verdichtet wird, der ein- oder mehrstufige Kompressor als pneumatischer Verbraucher nicht überlastet wird, wobei eine Überlastung insbesondere durch einen zu hohen eingehenden AufladeVolumenstrom oder Aufladedruck des erneut zu verdichtenden Aufladedruckmittels verursacht werden kann. Eine Überlastung kann beispielsweise dadurch auftreten, dass bei einem zu hohen Auflade-Volumenstrom von einem die Verdichtungsstufen des ein- oder mehrstufigen Kompressors antreibenden Motor ein zu hohes Drehmoment gefordert wird und dadurch ein benötigter Strom über eine Strombegrenzung von beispielsweise 35A ansteigt. Um dies zu vermeiden und den ein- oder mehrstufigen Kompressor knapp unterhalb seiner Leistungsgrenze betreiben zu können, findet vorab eine stufenlose Drosselung des Auflade-Volumenstromes statt.

Als Maß für eine aktuelle oder aktuell zu erwartende Belastung des ein- oder mehrstufigen Kompressors als pneumatischer Verbraucher kann als Vordruck bzw. Vorvolumenstrom entweder der Aufladedruck bzw. der Auflade-Volumenstrom des erneut zu verdichtenden Aufladedruckmittels oder aber ein Verdichtungsdruck bzw. ein Verdichtungs-Volumenstrom eines aus dem ein- oder mehrstufigen Kompressor nach erneuter Kompression ausgegebenen verdichteten Druckmittels verwendet werden. Weiterhin kann auch eine Differenz aus dem Aufladedruck und dem Verdichtungsdruck, d.h. der Druckunterschied zwischen dem in den ein- oder mehrstufigen Kompressor eingehenden und dem aus dem ein- oder mehrstufigen Kompressor nach erneuter Verdichtung ausgehenden Druckmittel, als Maß für eine aktuelle Belastung des ein- oder mehrstufigen Kompressors dienen. Die Drosselung kann daher auch in Abhängigkeit dieses Differenzdruckes erfolgen.

Die Höhe der Drosselung kann hierbei pneumatisch gesteuert werden. Dazu ist ein pneumatisch steuerbares Drosselventil vorgesehen, das in einer Aufladeleitung, über die in einem geschlossenen Betriebsmodus der Druckregelanlage ein bereits verdichtetes Aufladedruckmittel mit dem Auflade-Volumenstrom in eine beliebige Verdichtungsstufe des ein- oder mehrstufigen Kompressor zum erneuten Verdichten gefördert wird, angeordnet ist.

Wird in der Aufladeleitung gemäß der Erfindung ein pneumatisches Drosselventil verwendet, wird ein pneumatischer Steuereingang des pneumatischen Drosselventils mit dem entsprechenden Vordruck bzw. Vorvolumenstrom angesteuert, indem entweder das Aufladedruckmittel und/oder das Verdichtungsdruckmittel oder ein in einem dem pneumatischen Steuereingang vorgeschalteten Differenzdruckregler erzeugter Differenzdruck zugeführt wird. Alternativ kann das pneumatische Drosselventil den Differenzdruck auch selbst ermitteln, indem dem pneumatischen Drosselventil sowohl das Aufladedruckmittel als auch das Verdichtungsdruckmittel zugeführt wird und das pneumatische Drosselventil den Drossel-Querschnitt in Abhängigkeit des Druckunterschiedes zwischen beiden einstellt.

In Abhängigkeit der Höhe des Vordruckes oder Vorvolumenstromes am pneumatischen Steuereingang wird im pneumatischen Drosselventil anschließend stufenlos der Drossel-Querschnitt eingestellt, der auf das über die Aufladeleitung eingehende Aufladedruckmittel wirkt. In Abhängigkeit des Drossel-Querschnittes kann somit der Auflade-Volumenstrom auf einen Grenz-Volumenstrom begrenzt werden, wobei der Grenz-Volumenstrom dazu durch eine stufenlose Einstellung des Drossel-Querschnittes in Abhängigkeit davon gewählt wird, welchem Volumenstrom der ein- oder mehrstufige Kompressor im aktuellen Betriebsmodus maximal ausgesetzt werden sollte, ohne dass eine Überlastung insbesondere durch einen zu hohen Energieverbrauch auftritt, so dass der ein- oder mehrstufige Kompressor knapp unterhalb seiner Leistungsgrenze arbeitet.

Somit wird vorteilhafterweise erreicht, dass im Betrieb der Druckregelanlage mit einfachen Mitteln eine Überlastung vermieden werden kann. Dies kann zur Optimierung des ein- oder mehrstufigen Kompressors verwendet werden, so dass eine optimale Abstimmung insbesondere des Verdichtungs-Volumenstroms aus der zweiten bzw. letzten Verdichtungsstufe erfolgen kann. Ziel der Erfindung ist somit, durch die Verwendung des Drosselventils den ein- oder mehrstufigen Kompressor immer möglichst nahe an der Leistungsgrenze zu betreiben, wobei dazu optimaler Weise eine stufenlose Anpassung des Drossel-Querschnitts und somit des Grenz-Volumenstromes gewünscht ist.

Da in einem offenen Betriebsmodus kein Aufladedruckmittel durch die Aufladeleitung strömt und daher keine Anpassung der Leistungsaufnahme des ein- oder mehrstufigen Kompressors stattfindet, hat die Drosselung keinen Einfluss auf den normalen Betrieb der Druckregelanlage. Denn die Drosselung beeinflusst lediglich den geschlossenen Betriebsmodus und diesen auch nur dann, wenn der ein- oder mehrstufige Kompressor oberhalb der Leistungsgrenze arbeitet.

Gemäß einem nicht erfindungsgemäßen Beispiel ist ein elektrisch steuerbares Drosselventil vorgesehen, das beispielsweise als 2/2-Wegeventil ausgeführt ist und über einen elektrischen Steuereingang in zwei Schaltstellungen überführt werden kann. Dazu wird ein von einer Steuereinrichtung erzeugtes Steuersignal an den elektrischen Steuereingang übermittelt, wobei das Steuersignal in diesem Fall in Abhängigkeit des Vordruckes - d.h. des Aufladedruckes, des Verdichtungsdruckes oder des Differenzdruckes - und/oder des Vorvolumenstromes - d.h. des Auflade-Volumenstromes oder des Verdichtungs-Volumenstromes - erzeugt wird. Die Steuereinrichtung misst dazu den bzw. die entsprechenden Drücke bzw. Volumenströme beispielsweise mit Sensoren.

Die Schaltstellungen legen hierbei einen maximalen Drossel-Querschnitt und einen minimalen Drossel-Querschnitt fest: In einer ersten Schaltstellung ist das elektrische Drosselventil beispielsweise vollständig geschlossen, so dass ein minimaler Drossel-Querschnitt von 0mm eingestellt wird, da das elektrische Drosselventil ein Durchströmen des Aufladedruckmittels vollständig verhindert. In einer zweiten Schaltstellung ist das elektrische Drosselventil vollständig geöffnet, wodurch ein maximaler Drossel-Querschnitt von beispielsweise zwischen 1mm und 4mm festgelegt wird. Auf das eingehende Aufladedruckmittel wirkt somit dieser maximale Drossel-Querschnitt, der für eine Begrenzung des Auflade-Volumenstroms auf einen bestimmten Grenz-Volumenstrom sorgt.

Um mit diesen zwei Schaltstellungen auch eine stufenlose Einstellung des Grenz-Volumenstromes zu erreichen, kann das elektrische Drosselventil über ein pulsweitenmoduliertes Signal angesteuert werden. Dieses sorgt dafür, dass das elektrische Drosselventil abwechselnd zwischen der ersten und der zweiten Schaltstellung umgeschaltet wird, wobei dadurch auch der Drossel-Querschnitt mit der Zeit variiert. In Abhängigkeit des Umschaltverhaltens ergibt sich im Mittel ein mittlerer Drossel-Querschnitt, der auf das eingehende Aufladedruckmittel wirkt, wobei der mittlere Drossel-Querschnitt durch eine entsprechende Einstellung des Steuersignals stufenlos eingestellt werden kann.

Somit kann auch mit dem nicht erfindungsgemäßen elektrischen Drosselventil eine stufenlose Anpassung des Auflade-Volumenstromes stattfinden, wodurch die Leistungsaufnahme des ein- oder mehrstufigen Kompressors begrenzt werden kann. Die für das pneumatische Drosselventil geltenden Vorteile sind somit auch auf das elektrische Drosselventil anwendbar.

Das entsprechende Drosselventil kann vorteilhafterweise einfach und kostengünstig nachgerüstet werden, da das Drosselventil als kompaktes Bauteil in eine vorhandene Druckmittelleitung, beispielsweise die Aufladeleitung der Druckregelanlage, mit einem bereits vorhandenen Schaltventil, das das verdichtete Druckmittel, beispielsweise das Aufladedruckmittel freigibt, eingebaut werden kann. Somit kann der Aufwand zum Nachrüsten gering gehalten werden.

Ergänzend oder alternativ kann als elektrisch gesteuertes Drosselventil auch das bereits vorhandene Schaltventil zur Freigabe des Aufladedruckmittels aus dem Druckmittelvorrat oder den Druckmittelkammern verwendet werden. Ein zusätzliches Drosselventil kann dann als Backup verwendet werden oder entfallen. Sobald die Druckregelanlange in den geschlossenen Betriebsmodus geschaltet wird, wird durch die pulsweitenmodulierte Ansteuerung des jeweiligen Schaltventils das entsprechende volumenstrombegrenzte Aufladedruckmittel aus dem Druckmittelvorrat oder den Druckmittelkammern zur erneuten Verdichtung freigegeben.

Alternativ kann auch das bereits vorhandene Schaltventil entfallen und das elektrische Drosselventil sowohl zum Drosseln als auch zur Freigabe des jeweiligen Aufladedruckmittels verwendet werden, so dass Bauteile gespart werden können. Diese alternative Lösung ist dann anwendbar, wenn in der Druckregelanlage eine Aufladung lediglich aus dem Druckmittelvorrat oder aus den Druckmittelkammern vorgesehen ist, da eine unabhängige Freigabe von Aufladedruckmittel aus zwei Druckquellen mit lediglich einem elektrisch gesteuerten Drosselventil nicht möglich ist.

Die Erfindung wird im Folgenden anhand der beiliegenden Zeichnungen näher erläutert. Es zeigen:
- Fig. 1a, b, c, d: eine Luftfederanlage mit einem zweistufigen Kompressor mit einem pneumatisch steuerbaren Drosselventil;
- Fig. 1e: eine nicht erfindungsgemäße Luftfederanlage mit einem zweistufigen Kompressor mit einem elektrisch steuerbaren Drosselventil;
- Fig. 2a, b: pneumatisch steuerbare Drosselventile in unterschiedlichen Ausführungsformen als Detailansichten;
- Fig. 3: pulsweitenmodulierte Ansteuerung des elektrisch steuerbaren Drosselventils; und
- Fig. 4: ein Flussdiagramm des erfindungsgemäßen Verfahrens.

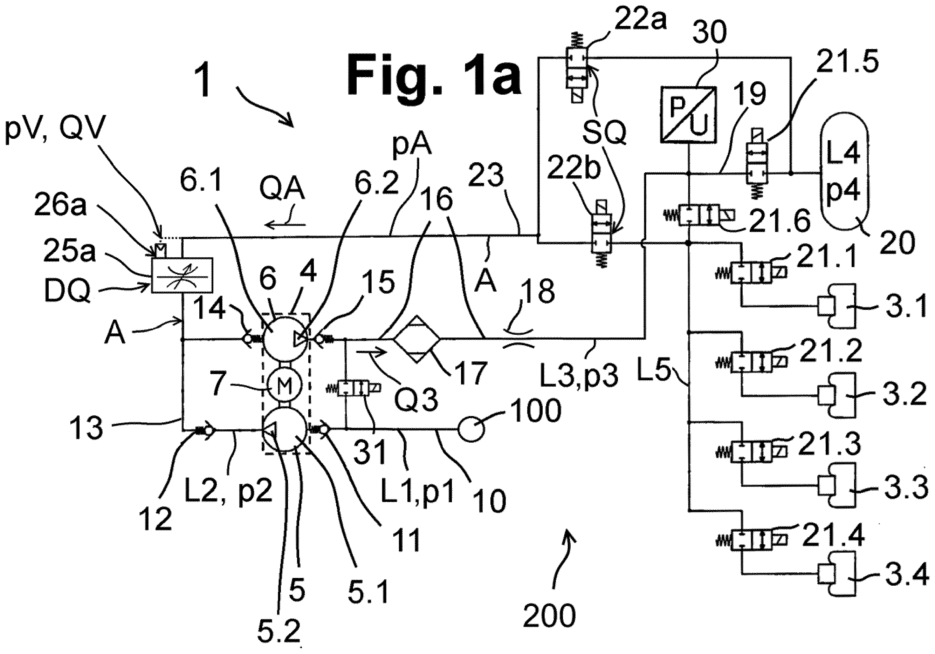

Gemäß den Figuren 1a bis 1e ist jeweils eine Druckregelanlage 1, beispielsweise eine Luftfederanlage vorgesehen, die vier Druckmittelkammern 3.1, 3.2, 3.3, 3.4 aufweist, die jeweils Luftfedern eines Fahrzeuges 200 zugeordnet sind. Die Druckmittelkammern 3.i werden mit einem verdichteten Druckmittel L3, beispielsweise Luft, versorgt, wobei das verdichtete Druckmittel L3 in einem zweistufigen Kompressor 4 verdichtet wird. Es kann aber auch ein einstufiger oder ein Kompressor 4 mit mehr als zwei Stufen in Frage kommen.

Der zweistufige Kompressor 4 weist dazu eine erste Verdichtungsstufe 5 sowie eine zweite Verdichtungsstufe 6 auf, die jeweils einen Ansaugraum 5.1, 6.1 und einen Verdichtungsraum 5.2, 6.2 aufweisen, wobei das in den jeweiligen Ansaugraum 5.1, 6.1 einströmende Druckmittel L1, L2, A in dem Verdichtungsraum 5.2, 6.2 verdichtet wird. Angetrieben werden die Verdichtungsstufen 5, 6 durch einen Motor 7, der bewirkt, dass sich ein in der jeweiligen Verdichtungsstufe 5, 6 befindlicher Kolben auf- und ab-bewegt und dadurch das im Ansaugraum 5.1, 6.1 bereitgestellte Druckmittel L1, L2, A entsprechend verdichtet wird.

Die Druckregelanlage 1 kann gemäß dieser Ausführung in zwei Betriebsmodi betrieben werden, einem offenen Betriebsmodus BMo (open mode) und einem geschlossenen Betriebsmodus BMc (closed mode), in denen jeweils Luft als Druckmittel L1, L2, L3, L4, L5, A gefördert und verdichtet wird. Im offenen Betriebsmodus BMo wird Ansaugluft L1 aus der Atmosphäre 100, d. h. mit einem Luftdruck bzw. Ansaugdruck p1 von ca. 1 bar, über eine Ansaugleitung 10 sowie ein erstes Einlassventil 11 in den ersten Ansaugraum 5.1 der ersten Verdichtungsstufe 5 eingeleitet. Anschließend wird die Ansaugluft L1 zunächst vorverdichtet und dabei in den ersten Verdichtungsraum 5.2 geleitet. Aus dem ersten Verdichtungsraum 5.2 strömt die vorverdichtete Luft L2 mit einem Zwischendruck p2 über ein erstes Auslassventil 12, beispielsweise ein Rückschlagventil, in ein Zwischenvolumen 13.

Aus dem Zwischenvolumen 13 gelangt die vorverdichtete Luft L2 über ein zweites Einlassventil 14 in den zweiten Ansaugraum 6.1 der zweiten Verdichtungsstufe 6, in der die vorverdichtete Luft L2 weiter verdichtet und in den zweiten Verdichtungsraum 6.2 eingeleitet wird. Aus der zweiten Verdichtungsstufe 6 gelangt die verdichtete Luft L3 mit einem Verdichtungsdruck p3 sowie einem Verdichtungs-Volumenstrom Q3 über ein zweites Auslassventil 15 in eine Auslassleitung 16 zu einem Lufttrockner 17 und einer Düse 18. Anschließend leitet die Auslassleitung 16 die verdichtete Luft L3 zu den Druckmittelkammern 3.1, 3.2, 3.3, 3.4 der angeschlossenen Luftfedern sowie über eine Vorratsleitung 19 zu einem Druckmittelvorrat 20, in dem die verdichtete Luft L3 als gespeicherte Luft L4 mit einem Vorratsdruck p4, der aufgrund von Verlusten etwas geringer ist als der Verdichtungsdruck p3, gespeichert wird.

Der Druckmittelvorrat 20 sowie die Druckmittelkammern 3.1, 3.2, 3.3, 3.4 sind jeweils durch ein steuerbares Ventil 21.1, 21.2, 21.3, 21.4, 21.5, 21.6 beispielsweise einem 2/2-Magnetventil, mit der Auslassleitung 16 bzw. der Vorratsleitung 19 verbindbar, so dass je nach Stellung der steuerbaren Ventile 21.i die verdichtete Luft L3 in die Druckmittelkammern 3.1, 3.2, 3.3, 3.4 zum Steuern der Luftfedern oder in den Druckmittelvorrat 20 strömen kann.

Demnach wird die verdichtete Luft L3 bei geöffnetem sechsten Ventil 21.6 sowie geöffnetem ersten Ventil 21.1 in die erste Druckmittelkammer 3.1, bei geöffnetem zweiten Ventil 21.2 in die zweite Druckmittelkammer 3.2, bei geöffnetem dritten Ventil 21.3 in die dritte Druckmittelkammer 3.3 und bei geöffnetem vierten Ventil 21.4 in die vierte Druckmittelkammer 3.4 geleitet, wobei dann das fünfte Ventil 21.5 geschlossen ist und somit keine verdichtete Luft L3 in den Druckmittelvorrat 20 strömen kann.

Befinden sich andererseits die Ventile 21.1, 21.2, 21.3, 21.4, 21.6 in der geschlossen Stellung und das fünfte Ventil 21.5 ist geöffnet, kann durch den Lufttrockner 17 getrocknete und verdichtete Luft L3 in den Druckmittelvorrat 20 eingeleitet und darin gespeichert werden. Eine Drucküberwachung kann über ein Druckmessgerät 30 erfolgen. Über ein zusätzliches Ablassventil 31 kann die verdichtete Luft L3 in die Atmosphäre 100 abgelassen werden.

Die im Druckmittelvorrat 20 gespeicherte Luft L4 kann im geschlossenen Betriebsmodus BMc als Aufladedruckmittel A in das Zwischenvolumen 13 eingelassen werden, so dass die bereits verdichtete gespeicherte Luft L4 ein weiteres Mal verdichtet wird. Dazu wird gemäß dieser Ausführungsform das fünfte Ventil 21.5 geschlossen und ein erstes Schaltventil 22a geöffnet, das in einer zwischen dem fünften Ventil 21.5 und dem Druckmittelvorrat 20 abzweigenden Aufladeleitung 23 angeordnet ist. Die Aufladeleitung 23 ist mit dem Zwischenvolumen 13 verbunden, so dass in der geöffneten Stellung des ersten Schaltventils 22a die gespeicherte Luft L4 in das Zwischenvolumen 13 sowie in den zweiten Ansaugraum 6.1 einströmen kann. Somit kann die verdichtete gespeicherte Luft L4 von der zweiten Verdichtungsstufe 6 erneut verdichtet werden. Sind mehr als zwei Verdichtungsstufen 5, 6 im Kompressor 4 vorgesehen, kann das Aufladedruckmittel A über die Aufladeleitung 23 auch in eine beliebige andere Verdichtungsstufe eingelassen werden.

Ist im geschlossenen Betriebsmodus BMc eine Rückführung von Kammerluft L5 aus den Druckmittelkammern 3.i in den Druckmittelvorrat 20 gewünscht, so wird das der jeweiligen Druckmittelkammer 3.i zugeordnete Ventil 21.i (mit i=1...4) sowie ein zweites Schaltventil 22b geöffnet und das sechste Ventil 21.6 geschlossen, so dass die Kammerluft L5 als Aufladedruckmittel A in die Aufladeleitung 23 eingelassen wird. Das erste Schaltventil 22a ist in diesem Fall ebenfalls geschlossen und das fünfte Ventil 21.5 geöffnet, um ein Rückführen in den Druckmittelvorrat 20 zu ermöglichen. Ist lediglich eine Verdichtung von gespeicherter Luft L4 in der Druckregelanlage 1 vorgesehen, kann der Pfad über das zweite Schaltventil 22b auch entfallen.

Zum Regeln der Leistungsaufnahme des mehrstufigen Kompressors 4 bei der erneuten Verdichtung des Aufladedruckmittels A im geschlossenen Betriebsmodus BMc ist in der Aufladeleitung 23 ein pneumatisch steuerbares Drosselventil 25a, 25b vorgesehen, mit dem ein Auflade-Volumenstrom QA des in der Aufladeleitung 23 strömenden Aufladedruckmittels A stufenlos eingestellt und dabei auf einen Grenz-Volumenstrom QG begrenzt werden kann. Um dieses stufenlose Einstellen des Auflade-Volumenstroms QA zu erreichen, wird ein Drossel-Querschnitt DQ des Drosselventils 25a, 25b stufenlos angepasst, wobei der Drossel-Querschnitt DQ einen effektiven Leitungsquerschnitt des jeweiligen Drosselventils 25a, 25b angibt, der auf das Aufladedruckmittel A beim Durchströmen des jeweiligen Drosselventils 25a, 25b wirkt. In den Fig. 1a bis 1e sind unterschiedliche Ausführungsformen des Drosselventils 25a, 25b dargestellt, die sich insbesondere durch ihre Ansteuerung voneinander unterscheiden.

In allen Ausführungen ist zunächst vorgesehen, das Aufladedruckmittel A mit dem Aufladedruck pA und dem Auflade-Volumenstrom QA dem jeweiligen Drosselventil 25a, 25b über die Aufladeleitung 23 zuzuführen. Über die Aufladeleitung 23 ist das Drosselventil 25a, 25b mit den beiden Schaltventilen 22a, 22b verbunden, die jeweils einen Schaltventil-Querschnitt SQ von zwischen 1mm und 4mm aufweisen, über die bei alternativ geöffneten Schaltventilen 22a, 22b der Auflade-Volumenstrom QA bereits vorab begrenzt wird, da durch die Schaltventile 22a, 22b aufgrund des Schaltventil-Querschnittes SQ nur ein begrenzter Volumenstrom passieren kann. Die Schaltventile 22a, 22b werden elektronisch angesteuert und dadurch eines der Schaltventile 22a, 22b geöffnet sobald elektrisch eine Anforderung zum Wechseln in den geschlossenen Betriebsmodus BMc erfolgt, in dem die gespeicherte Luft L4 oder die Kammerluft L5 als Aufladedruckmittel A in die Aufladeleitung 23 freigegeben wird.

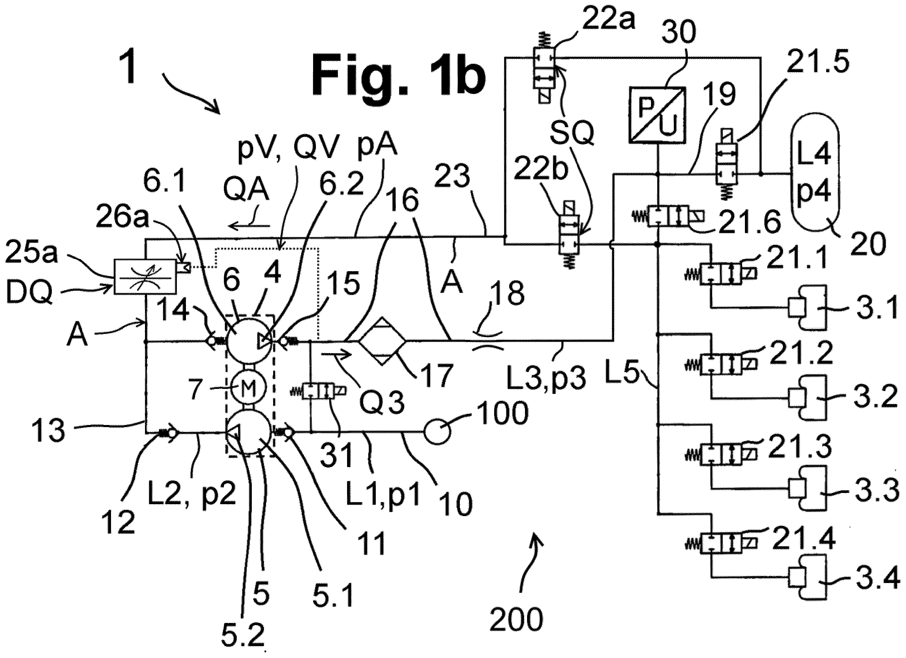

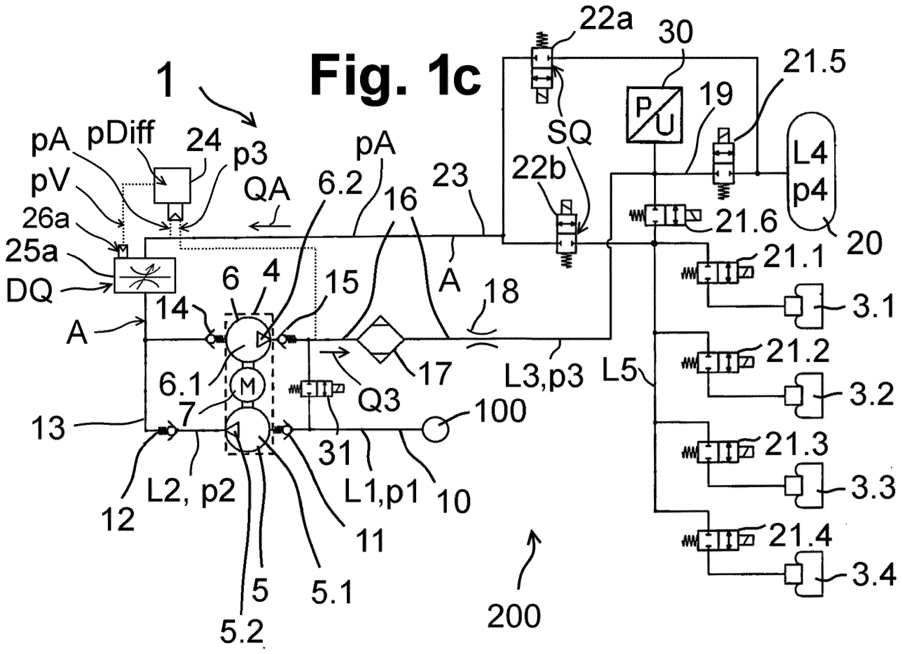

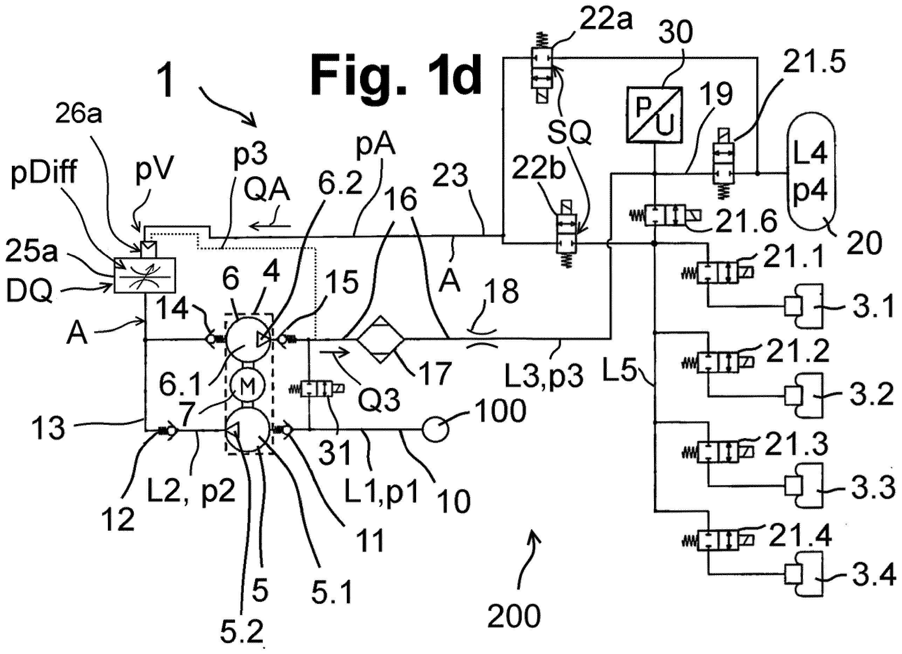

Gemäß den Ausführungsformen in Fig. 1a, 1b, 1c und 1d weist das pneumatisch steuerbare Drosselventil 25a einen pneumatischen Steuereingang 26a auf, der gemäß Fig. 1a mit der Aufladeleitung 23, gemäß Fig. 1b mit der Auslassleitung 16, gemäß Fig. 1c mit einem Differenzdruckregeler 24 und gemäß Fig. 1d mit der Aufladeleitung 23 und mit der Auslassleitung 16 verbunden ist, wobei der Differenzdruckregeler 24 einen Differenzdruck pDiff ausgibt, der der Differenz zwischen dem Aufladedruck pA und dem Verdichtungsdruck p3 entspricht.

Dem pneumatischen Steuereingang 26a kann somit das Aufladedruckmittel A mit dem Aufladevolumenstrom QA und dem Aufladedruck pA (Fig. 1a) oder das Verdichtungsdruckmittel L3 mit dem Verdichtungsdruck p3 und dem Verdichtungs-Volumenstrom Q3 (Fig. 1b) oder der Differenzdruck pDiff (Fig. 1c) oder sowohl das Aufladedruckmittel A als auch das Verdichtungsdruckmittel L3 (Fig. 1d) zugeführt werden. Im Folgenden wird in allen Fällen der am pneumatischen Steuereingang 26a wirkende Druck pA, p3, pDiff als Vordruck pV und der Volumenstrom QA, Q3 als Vorvolumenstrom QV bezeichnet, in dessen Abhängigkeit das pneumatisch steuerbare Drosselventil 25a angesteuert wird.

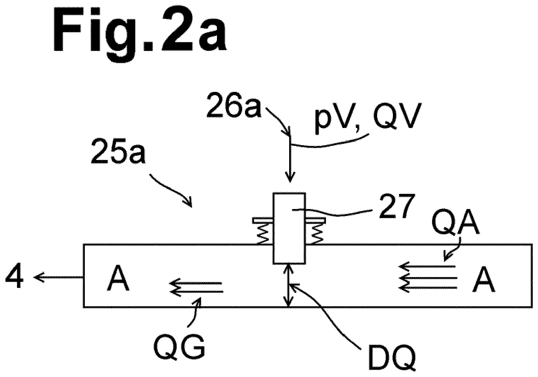

Gemäß Fig. 2a ist das pneumatische Drosselventil 25a derartig aufgebaut, dass der am pneumatischen Steuereingang 26a anliegende Vordruck pV oder der Vorvolumenstrom QV einen federvorgespannten Drossel-Kolben 27 derartig stufenlos in den Strömungspfad des Aufladedruckmittels A bewegt, dass sich der Drossel-Querschnitt DQ bei steigendem Vordruck pV oder steigendem Vorvolumenstrom QV stufenlos verringert. Dadurch verringert sich auch der Grenz-Volumenstrom QG, der durch den Drossel-Querschnitt DQ festgelegt wird. Ein Einströmen des Aufladedruckmittels A mit einem zu hohen Volumenstrom QA in den Kompressor 4 kann somit verhindert werden.

Die Bewegung des Drossel-Kolbens 27 ist hierbei daran anzupassen, ob dem pneumatischen Drosselventil 25a über den pneumatischen Steuereingang 26a das Aufladedruckmittel A, das Verdichtungsdruckmittel L3 oder der Differenzdruck pDiff vorgegeben wird, da für unterschiedliche Drücke p3, pA, pDiff und unterschiedliche Volumenströme Q3, QA derselbe Grenz-Volumenstrom QG einzustellen ist. Wird ein Differenzdruck pDiff vorgegeben, ist die Abstimmung des Drossel-Kolbens 27 beispielsweise derartig zu wählen, dass der Differenzdruck pDiff auf einem konstanten Differenzwert WDiff gehalten wird. D.h. auch bei niedrigem Aufladedruck pA soll lediglich ein entsprechend niedriger Verdichtungsdruck p3 vom mehrstufigen Kompressor 4 erzeugt werden.

In allen Fällen ist der Grenz-Volumenstrom QG derartig zu wählen, dass der Kompressor 4 nicht überlastet wird und ständig knapp unter seiner Leistungsgrenze arbeitet.

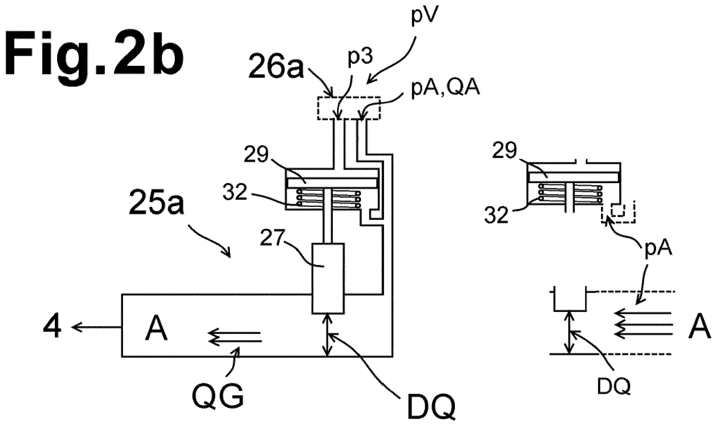

Für die Ausführungsform in Fig. 1d ist ein anderes pneumatisches Drosselventil 25a zu wählen, da als Vordrücke pV sowohl der Verdichtungsdruck p3 als auch der Aufladedruck pA anliegen. Dazu ist in Fig. 2b schematisch eine alternative Ausführungsform des pneumatischen Drosselventils 25a dargestellt, bei der eine Einstellung eines Grenz-Volumenstroms QG in Abhängigkeit des Differenzdruckes pDiff dadurch erreicht wird, dass dem pneumatischen Drosselventil 25a als Vordruck pV der Verdichtungsdruck p3 und der Aufladedruck pA zugeführt wird. Der Verdichtungsdruck p3 und der Aufladedruck pA wirken von unterschiedlichen Seiten auf einen mit dem Drossel-Kolben 27 wirkverbundenen Regel-Kolben 29, der je nach Druckunterschied zwischen p3 und pA den Drossel-Kolben 27 stärker oder weniger stark in den Strömungspfad des Aufladedruckmittels A verstellt. Der Regel-Kolben 29 ist hierbei über eine Feder 32, insbesondere eine Druckfeder, vorgespannt, um den Differenzdruck zu pDiff zu unterstützen und den Regel-Kolben 29 in Abhängigkeit davon in die gewünschte spezifische Position zu stellen. Somit kann der Aufladedruck pA oder der Aufladevolumenstrom QA je nach Druckunterschied weniger stark oder stärker begrenzt werden, um einen konstanten Differenzwert WDiff halten zu können. Alternativ kann in dem pneumatischen Drosselventil 25a gemäß Fig. 2b das Aufladedruckmittel A mit dem Aufladedruck pA zum einen über den pneumatischen Steuereingang 26a und zusätzlich wie gestrichelt angedeutet analog zu Fig. 2a auch aus der Aufladeleitung 23 direkt zugeführt werden, wobei dann die pneumatische Verbindung zwischen dem Regel-Kolben 29 und dem Drossel-Kolben 27 entfällt.

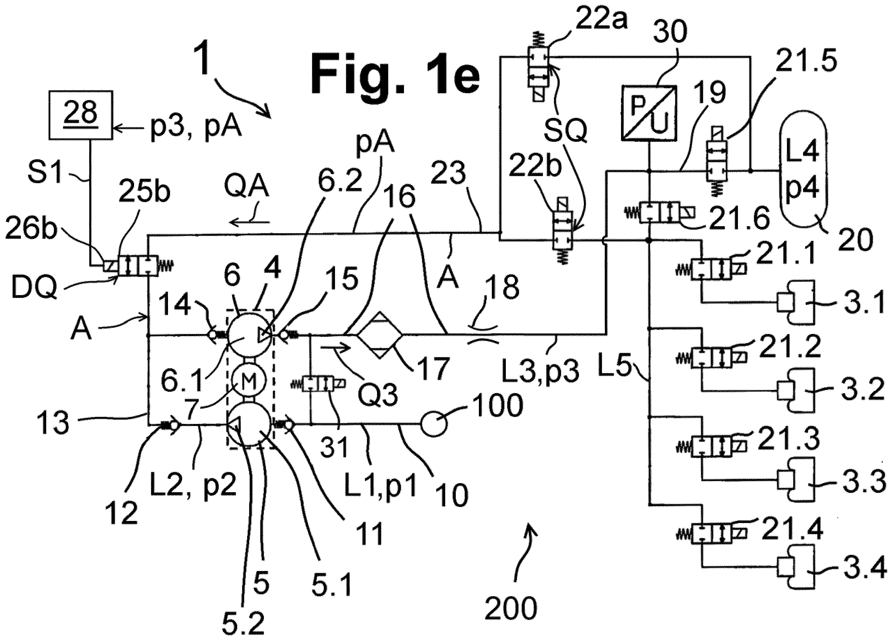

Alternativ kann gemäß dem nicht erfindungsgemäßen Beispiel in Fig. 1e ein elektrisch steuerbares Drosselventil 25b vorgesehen sein, das über ein elektrisches Steuersignal S1 angesteuert wird. Das elektrische Steuersignal S1 wird hierbei in einer Steuereinrichtung 28 in Abhängigkeit des Vordruckes pV, d.h. des Aufladedruckes p3 und/oder des Verdichtungsdruckes p3, und/oder des Vorvolumenstroms QV, d.h. des Auflade-Volumenstromes QA oder des Verdichtungs-Volumenstroms Q3, erzeugt und an den in dem Fall elektrischen Steuereingang 26b des elektrischen Drosselventils 25b übertragen. Dabei kann auch eine Steuerung in Abhängigkeit des Differenzdruckes pDiff zwischen dem Aufladedruck pA und dem Verdichtungsdruck p3 erfolgen, der in dem Fall beispielsweise in der Steuereinrichtung 28 ermittelt wird.

Das elektrische Drosselventil 25b ist gemäß dem nicht erfindungsgemäßen Beispiel in Fig. 1e als ein 2/2-Wegeventil ausgeführt, das in zwei Schaltstellungen X1, X2 überführt werden kann, wobei die einzustellende Schaltstellung X1, X2 durch das Steuersignal S1 vorgegeben wird und bei entsprechender Ansteuerung eine Drosselung gewährleistet werden kann. In einer ersten Schaltstellung X1 ist das elektrische Drosselventil 25b geschlossen und in einer zweiten Schaltstellung X2 geöffnet.

Bei dauerhaft eingestellter erster Schaltstellung X1 wird durch das elektrische Drosselventil 25b ein minimaler Drossel-Querschnitt DQ_min von 0mm vorgegeben, da ein Durchströmen des geschlossenen elektrischen Drosselventils 25b vollständig verhindert wird. Bei dauerhaft eingestellter zweiter Schaltstellung X2 ist das elektrische Drosselventil 25b vollständig geöffnet und es wird ein maximaler Drossel-Querschnitt DQ_max eingestellt, der einem Querschnitt des geöffneten 2/2-Wegeventils entspricht. Ein Durchströmen des elektrischen Drosselventils 25b ist somit möglich und der Auflade-Volumenstrom QA wird bei kontinuierlich eingestellter zweiter Schaltstellung X2 auf einen Grenz-Volumenstrom QG begrenzt, der sich durch den maximalen Drossel-Querschnitt DQ_max ergibt. Ist der maximale Drossel-Querschnitt DQ_max gleich dem Schalt-Querschnitt SQ der Schaltventile 22a, 22b, findet keine Anpassung des Auflade-Volumenstromes QA statt. Lediglich Verluste können diesen geringfügig mindern.

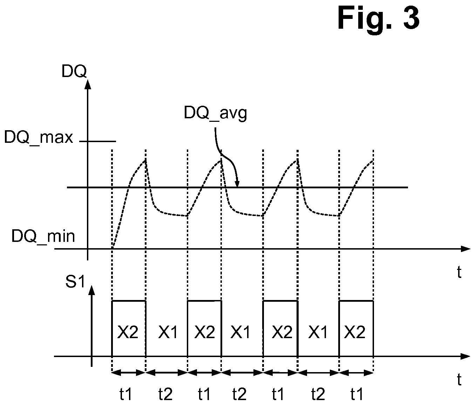

Um mit diesem Aufbau auch eine stufenlose Einstellung des Grenz-Volumenstromes QG zu ermöglichen, ist eine stufenlose Einstellung des Drossel-Querschnittes DQ erforderlich. Dies kann durch eine pulsweitenmodulierte Ansteuerung des elektrischen Drosselventils 25b erreicht werden. Dazu wird das elektrische Drosselventil 25b von der Steuereinrichtung 28 über das Steuersignal S1 abwechselnd zwischen der ersten und der zweiten Schaltstellung X1, X2 umgeschaltet. Der Signalverlauf ist beispielhaft in Fig. 3 dargestellt. In Abhängigkeit einer Pulszeit t1, in der die zweite Schaltstellung X2 eingestellt ist, und einer Pausenzeit t2, in der die erste Schaltstellung X1 eingestellt ist, ergibt sich über die Zeit t ein pulsierender Drossel-Querschnitt DQ, der aufgrund der kurzen Schaltzeiten t1, t2 nicht den minimalen Drossel-Querschnitt DQ_min von 0mm in der ersten Schaltstellung X1 und den maximalen Drossel-Querschnitt DQ_max von 4mm in der zweiten Schaltstellung X2 erreicht.

Darüber kann elektrisch gesteuert stufenlos ein mittlerer Drossel-Querschnitt DQ_avg eingestellt werden, der im Mittel auf das Aufladedruckmittel A wirkt und über den der Grenz-Volumenstrom QG stufenlos eingestellt werden kann. Wird die Pulszeit t1 größer als die Pausenzeit t2 gewählt, ergibt sich insgesamt ein höherer mittlerer Drossel-Querschnitt DQ_avg. Wird die Pausenzeit t2 höher gewählt als die Pulszeit t1 kann ein niedriger mittlerer Drossel-Querschnitt DQ_avg eingestellt werden.

Alternativ können als elektrisch gesteuerte Drosselventile 25b auch direkt die Schaltventile 22a, 22b verwendet werden. Wird die Druckregelanlage 1 in den geschlossenen Betriebsmodus BMc geschaltet, wird das entsprechende Schaltventil 22a, 22b mit dem Steuersignal S1 pulsweitenmoduliert angesteuert, so dass eine Freigabe des entsprechenden Aufladedruckmittels A von vornherein volumenstrombegrenzt erfolgt. In der Steuereinrichtung 28 ist dann eine entsprechende Logik integriert, die eine vordruckabhängige oder volumenstromabhängige Ansteuerung der Schaltventile 22a, 22b als elektrisches Drosselventil 25b erst dann erlaubt, wenn der geschlossene Betriebsmodus BMc aktiviert wurde.

Der Vordruck pV bzw. der Vorvolumenstrom QV dienen in allen Ausführungsformen als Maß einer aktuellen (p3 als Vordruck pV; Q3 als Vorvolumenstrom QV) bzw. aktuell zu erwartenden (pA als Vordruck pV; QA als Vorvolumenstrom QV) Belastung des mehrstufigen Kompressors 4 als pneumatischer Verbraucher in der Druckregelanlage 1. Auch der Differenzdruck pDiff gibt an, wie stark die jeweils aktive Verdichtungsstufe 5, 6 arbeitet, um diesen Differenzdruck pDiff zwischen dem eingehenden Druckmittel, hier das Aufladedruckmittel A, und dem ausgehenden Druckmittel, hier das Verdichtungsdruckmittel L3, zu erzeugen. In Abhängigkeit davon wird in dem jeweiligen Drosselventil 25a, 25b der Drossel-Querschnitt DQ bzw. mittlere Drossel-Querschnitt DQ_avg stufenlos eingestellt, um den Auflade-Volumenstrom QA zu begrenzen und den Kompressor 4 somit unter der Leistungsgrenze zu betreiben.

Somit kann durch die unterschiedlichen Ausführungsformen eine vordruckabhängige oder volumenstromabhängige stufenlose Volumenstrombegrenzung auf den Grenz-Volumenstrom QG erreicht werden, um eine Überlastung des mehrstufigen Kompressors 4 zu vermeiden. Dadurch kann im geschlossenen Betriebsmodus BMc eine Leistungsbegrenzung erreicht werden, mit der der Energiebedarf des Kompressors 4 variabel angepasst werden kann. Die benötigte Leistungsaufnahme des Motors 7 des Kompressors 4 wird somit begrenzt, da eine begrenzte Verdichtungsarbeit zu verrichten ist. Dies kann zur Optimierung des mehrstufigen Kompressors verwendet werden, so dass eine optimale Abstimmung insbesondere des Verdichtungs-Volumenstroms Q3 aus der zweiten Verdichtungsstufe 6 erfolgen kann.

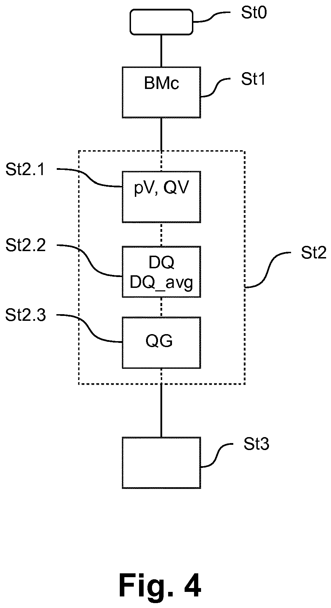

Gemäß Fig. 4 kann das erfindungsgemäße Verfahren wie folgt durchgeführt werden:
In einem anfänglichen Schritt St0 wird die Druckregelanlage 1 initialisiert. Anschließend wird in einem ersten Schritt St1 geprüft, ob der geschlossene Betriebsmodus BMc eingestellt ist. Ist dies der Fall, strömt das Aufladedruckmittel A durch die Aufladeleitung A und der mehrstufige Kompressor 4 verdichtet dieses Aufladedruckmittel A in mindestens einer der Verdichtungsstufen 5, 6 ein weites Mal. Vom mehrstufigen Kompressor 4 wird ein verdichtetes Druckmittel L3 in die Auslassleitung 16 ausgegeben.

Zur Leistungsbegrenzung des mehrstufigen Kompressors 4 bei der Durchführung dieser erneuten Verdichtung findet in einem zweiten Schritt St2 eine stufenlose Anpassung des Auflade-Volumenstromes QA statt. Dazu wird in einem ersten Teilschritt St2.1 ein Drosselventil 25a, 25b in der Aufladeleitung 23 vordruckabhängig pV oder vorvolumenstromabhängig QV angesteuert. Der Vordruck pV kann hierbei der Aufladedruck pA, der Verdichtungsdruck p3 oder der Differenzdruck pDiff sein. Der Vorvolumenstrom QV wird durch den Auflade-Volumenstrom QA oder den Verdichtungs-Volumenstrom Q3 vorgegeben.

Die Ansteuerung erfolgt pneumatisch, d.h. der pneumatische Steuereingang 26a des pneumatischen Drosselventils 25a wird mit dem entsprechenden Vordruck pV und/oder Vorvolumenstrom QV angesteuert.

In einem zweiten Teilschritt St2.2 wird in Abhängigkeit des Vordruckes pV und/oder des Vorvolumenstromes QV im pneumatischen Drosselventil 25a ein Drossel-Querschnitt DQ eingestellt. Im pneumatischen Drosselventil 25a geschieht dies über einen Drossel-Kolben 27

Dadurch wird in einem dritten Teilschritt St2.3 ein Grenz-Volumenstrom QG eingestellt, auf den der Auflade-Volumenstrom QA begrenzt wird, wenn das Aufladedruckmittel A das entsprechende Drosselventil 25a, 25b im geschlossenen Betriebsmodus BMc durchströmt. Dadurch wird in einem dritten Schritt St3 ein volumenstrombegrenztes QG Aufladedruckmittel A in das Zwischenvolumen 13 oder an eine beliebige andere Verdichtungsstufe 5, 6 des mehrstufigen Kompressors 4 eingeleitet, um vom mehrstufigen Kompressor 4 ohne Überschreitung der Leistungsgrenze erneut verdichtet zu werden.

### Bezugszeichenliste (Teil der Beschreibung)

- 1: Luftfederanlage
- 3.i: Druckmittelkammern
- 4: zweistufiger Kompressor
- 5: erste Verdichtungsstufe
- 5.1: erster Ansaugraum
- 5.2: erster Verdichtungsraum
- 6: zweite Verdichtungsstufe
- 6.1: zweiter Ansaugraum
- 6.2: zweiter Verdichtungsraum
- 7: Motor
- 10: Ansaugleitung
- 11: erstes Einlassventil
- 12: erstes Auslassventil
- 13: Zwischenvolumen
- 14: zweites Einlassventil
- 15: zweites Auslassventil
- 16: Auslassleitung
- 17: Lufttrockner
- 18: Düse
- 19: Vorratsleitung
- 20: Druckmittelvorrat
- 21.i: steuerbare Ventile
- 22a: erstes Schaltventil
- 22b: zweites Schaltventil
- 23: Aufladeleitung
- 24: Differenzdruckregler
- 25a: pneumatisch steuerbares Drosselventil
- 25b: elektrisch steuerbares Drosselventil
- 26a: pneumatischer Steuereingang
- 26b: elektrischer Steuereingang
- 27: Drossel-Kolben
- 28: Steuereinrichtung
- 29: Regel-Kolben
- 30: Druckmessgerät
- 31: Ablassventil
- 32: Feder
- 100: Atmosphäre
- 200: Fahrzeug

- A: Aufladedruckmittel
- BMo: offener Betriebsmodus
- BMc: geschlossener Betriebsmodus
- DQ: Drossel-Querschnitt
- DQ_avg: mittlerer Drossel-Querschnitt
- DQ_max: maximaler Drossel-Querschnitt
- DQ_min: minimaler Drossel-Querschnitt
- L1: Ansaugluft
- L2: vorverdichtete Luft
- L3: verdichtete Luft
- L4: gespeicherte Luft
- L5: Kammerluft
- p1: Luftdruck/Ansaugdruck
- p2: Zwischendruck
- p3: Verdichtungsdruck
- p4: Vorratsdruck
- pA: Aufladedruck
- pDiff: Differenzdruck
- pV: Vordruck
- Q3: Verdichtungs-Volumenstrom
- QA: Auflade-Volumenstrom
- QG: Grenz-Volumenstrom
- QV: Vorvolumenstrom
- S1: Steuersignal
- SQ: Schaltventil-Querschnitt
- t: Zeit
- t1: Pulszeit
- t2: Pausenzeit
- WDiff: Differenzwert
- X1: erste Schaltstellung
- X2: zweite Schaltstellung

## Patentansprüche

1. Verfahren zum Betreiben einer Druckregelanlage (1) in einem Fahrzeug (200), mit mindestens den folgenden Schritten:
- Ansteuern eines Drosselventils (25a; 25b) in einer ein Aufladedruckmittel (A) übertragenden Aufladeleitung (23) in Abhängigkeit eines Vordruckes (pV) und/oder eines Vorvolumenstroms (QV), wobei der Vordruck (pV) und/oder der Vorvolumenstrom (QV) eine aktuelle oder aktuell zu erwartende Belastung eines pneumatischen Verbrauchers (4), in Form eines ein- oder mehrstufigen Kompressors (4), der Druckregelanlage (1) bei Zuführen des Aufladedruckmittels (A) mit einem Auflade-Volumenstrom (QA) und einem Aufladedruck (pA) in den pneumatischen Verbraucher (4) charakterisiert (St1);
- Einstellen eines auf das Aufladedruckmittel (A) beim Durchströmen des Drosselventils (25a; 25b) wirkenden Drossel-Querschnitts (DQ) oder mittleren Drossel-Querschnitts (DQ_avg) zum Begrenzen des Auflade-Volumenstromes (QA) auf einen Grenz-Volumenstrom (QG), wobei der Drossel-Querschnitt (DQ) oder der mittlere Drossel-Querschnitt (DQ_avg) in Abhängigkeit des Vordruckes (pV) und/oder des Vorvolumenstromes (QV) stufenlos eingestellt wird (St2, St2.1, St2.2, St2.3); und
- Ausgeben des volumenstrombegrenzten (QG) Aufladedruckmittels (A) an den pneumatischen Verbraucher (4) (St3), **dadurch gekennzeichnet, dass** die Ansteuerung des Drosselventils (25a) pneumatisch erfolgt, wobei dazu ein pneumatisch steuerbares Drosselventil (25a) über einen pneumatischen Steuereingang (26a) mit dem Vordruck (pV) und/oder dem Vorvolumenstrom (QV) angesteuert wird und das pneumatische Drosselventil (25a) in Abhängigkeit des pneumatisch zugeführten Vordruckes (pV) und/oder Vorvolumenstroms (QV) stufenlos seinen Drossel-Querschnitt (DQ) ändert zum stufenlosen Begrenzen des Auflade-Volumenstromes (QA) auf den Grenz-Volumenstrom (QG) und wobei - der Vordruck (pV) durch den Aufladedruck (pA) des Aufladedruckmittels (A) und/oder einen Verdichtungsdruck (p3) eines aus dem pneumatischen Verbraucher (4) ausgehenden verdichteten Druckmittels (L3) oder durch einen Differenzdruck (pDiff) aus dem Aufladedruck (pA) und dem Verdichtungsdruck (p3), und
- der Vorvolumenstrom (QV) durch den Auflade-Volumenstrom (QA) des Aufladedruckmittels (A) und/oder durch einen Verdichtungs-Volumenstrom (Q3) des aus dem pneumatischen Verbraucher (4) ausgehenden verdichteten Druckmittels (L3) vorgegeben wird.

2. Verfahren nach Anspruch 1, **dadurch gekennzeichnet, dass** der Drossel-Querschnitt (DQ) oder der mittlere Drossel-Querschnitt (DQ_avg) des jeweiligen Drosselventils (25a; 25b) derartig eingestellt werden, dass der Differenzdruck (pDiff) auf einem konstanten Differenzwert (WDiff) gehalten wird.

3. Verfahren nach Anspruch 1 oder 2, **dadurch gekennzeichnet, dass** der Drossel-Querschnitt (DQ) oder der mittlere Drossel-Querschnitt (DQ_avg) des jeweiligen Drosselventils (25a; 25b) derartig stufenlos eingestellt wird, dass bei steigendem Aufladedruck (pA) und/oder Auflade-Volumenstrom (QA) oder steigendem Verdichtungsdruck (p3) und/oder Verdichtungs-Volumenstrom (Q3) der Drossel-Querschnitt (DQ) oder der mittlere Drossel-Querschnitt (DQ_avg) stufenlos reduziert werden zum stufenlosen Begrenzen der Leistungsaufnahme des pneumatischen Verbrauchers (4).

4. Druckregelanlage (1), insbesondere für ein Fahrzeug (200), mit einem ein- oder mehrstufigen Kompressor (4) als pneumatischen Verbraucher zum Durchführen des Verfahrens nach einem der vorhergehenden Ansprüche,
wobei der ein- oder mehrstufige Kompressor (4) mindestens eine Verdichtungsstufe (6) zum Bereitstellen des verdichteten Druckmittels (L3) aufweist,
wobei mindestens eine mit zumindest einer der Verdichtungsstufen (5, 6) strömungsverbindbare Druckmittelkammer (3.i; i=1...4) und/oder ein mit zumindest einer der Verdichtungsstufen (5, 6) strömungsverbindbarer Druckmittelvorrat (20) zum Speichern des verdichteten Druckmittels (L3) vorgesehen ist, und
eine Aufladeleitung (23) vorgesehen ist, die den Druckmittelvorrat (20) und/oder die mindestens eine Druckmittelkammer (3.i) mit zumindest einer der Verdichtungsstufen (5, 6) verbindet, zum Fördern eines in dem Druckmittelvorrat (20) gespeicherten Druckmittels (L4) oder eines in den Druckmittelkammern (3.i) genutzten Kammerdruckmittels (L5) als Aufladedruckmittel (A) in zumindest eine der Verdichtungsstufen (5, 6) des ein- oder mehrstufigen Kompressors (4),
**dadurch gekennzeichnet, dass** ein pneumatisch steuerbares Drosselventil (25a; 25b) in der Aufladeleitung (23) angeordnet ist, wobei der Drossel-Querschnitt (DQ) oder der mittlere Drossel-Querschnitt (DQ_avg) des jeweiligen Drosselventils (25a; 25b) pneumatisch gesteuert stufenlos einstellbar sind zum stufenlosen Begrenzen des Auflade-Volumenstromes (QA) des Aufladedruckmittels (A) auf den Grenz-Volumenstrom (QG), wobei das pneumatisch steuerbare Drosselventil (25a) über einen pneumatischen Steuereingang (26a) mit der Aufladeleitung (23) und/oder einer das verdichtete Druckmittel (L3) fördernden Auslassleitung (16) oder einem Differenzdruckregler (24) verbunden ist zum Vorgeben des entsprechenden Vordruckes (pV) und/oder Vorvolumenstromes (QV),
wobei der Differenzdruckregler (24) als Vordruck (pV) den Differenzdruck (pDiff) zwischen dem Aufladedruck (pA) und dem Verdichtungsdruck (p3) ausgibt.

5. Druckregelanlage (1) nach Anspruch 4, **dadurch gekennzeichnet, dass** die Druckregelanlage eine Luftfederanlage (1) ist.

6. Druckregelanlage (1) nach einem der Ansprüche 4 oder 5, **dadurch gekennzeichnet, dass** der Drossel-Querschnitt (DQ) über einen pneumatisch in Abhängigkeit des Vordruckes (pV) und/oder des Vorvolumenstromes (QV) betätigbaren Drossel-Kolben (27) einstellbar ist.

7. Druckregelanlage (1) nach Anspruch 6, **dadurch gekennzeichnet, dass** der Drossel-Kolben (27) mit einem Regel-Kolben (29) in Wirkverbindung steht, wobei der Regel-Kolben (29) in Abhängigkeit des Aufladedruckes (pA) und des Verdichtungsdruckes (p3) als Vordruck (pV) derartig verstellbar ist, dass der Drossel-Querschnitt (DQ) über den Drossel-Kolben (27) in Abhängigkeit des Differenzdruckes (pDiff) zwischen dem Aufladedruck (pA) und dem Verdichtungsdruck (p3) einstellbar ist.

8. Fahrzeug (200), insbesondere Personenkraftwagen (200), mit einer Druckregelanlage (1) nach einem der Ansprüche 4 bis 7.

## Claims

1. Method for operating a pressure control system (1) in a vehicle (200), said method comprising at least the following steps:
- controlling a flow-control valve (25a; 25b) in a charging line (23), which conveys a charging pressure medium (A), in dependence upon an admission pressure (pV) and/or upon an admission volume flow (QV), wherein the admission pressure (pV) and/or the admission volume flow (QV) characterizes a prevailing or currently to be expected loading of a pneumatic consumer (4), in the form of a single-stage or multi-stage compressor (4), of the pressure control system (1) during the supply of the charging pressure medium (A) with a charging volume flow (QA) and at a charging pressure (pA) into the pneumatic consumer (4) (St1);
- adjusting a flow-control cross-section (DQ), which acts on the charging pressure medium (A) as it flows through the flow-control valve (25a; 25b), or adjusting an average flow-control cross-section (DQ_avg) so as to limit the charging volume flow (QA) to a limit volume flow (QG), wherein the flow-control cross-section (DQ) or the average flow-control cross-section (DQ_avg) is adjusted in a continuously variable manner in dependence upon the admission pressure (pV) and/or upon the admission volume flow (QV) (St2, St2.1, St2.2, St2.3); and
- outputting the volume-flow limited (QG) charging pressure medium (A) to the pneumatic consumer (4) (St3), **characterized in that** the flow-control valve (25a) is controlled pneumatically, wherein for this purpose a pneumatically controllable flow-control valve (25a) is controlled via a pneumatic control input (26a) at the admission pressure (pV) and/or with the admission volume flow (QV), and the pneumatic flow-control valve (25a) changes its flow-control cross-section (DQ) in a continuously variable manner in dependence upon the pneumatically supplied admission pressure (pV) and/or the admission volume flow (QV) so as to limit in a continuously variable manner the charging volume flow (QA) to the limit volume flow (QG), and wherein
- the admission pressure (pV) is predetermined by means of the charging pressure (pA) of the charging pressure medium (A) and/or by means of a compression pressure (p3) of a compressed pressure medium (L3) that is flowing out of the pneumatic consumer (4) or by means of a difference pressure (pDiff) between the charging pressure (pA) and the compression pressure (p3), and
- the admission volume flow (QV) is predetermined by the charging volume flow (QA) of the charging pressure medium (A) and/or by means of a compression volume flow (Q3) of the compressed pressure medium (L3) that is flowing out of the pneumatic consumer (4).

2. Method according to Claim 1, **characterized in that** the flow-control cross-section (DQ) or the average flow-control cross-section (DQ_avg) of the respective flow-control valve (25a; 25b) is adjusted in such a manner that the difference pressure (pDiff) is held at a constant difference value (WDiff).

3. Method according to Claim 1 or 2, **characterized in that** the flow-control cross-section (DQ) or the average flow-control cross-section (DQ_avg) of the respective flow-control valve (25a; 25b) is adjusted in a continuously variable manner in such a manner that in the case of an increasing charging pressure (pA) and/or charging volume flow (QA) or increasing compression pressure (p3) and/or compression volume flow (Q3) the flow-control cross-section (DQ) or the average flow-control cross-section (DQ_avg) are reduced in a continuously variable manner so as to limit the power consumption of the pneumatic consumer (4) in a continuously variable manner.

4. Pressure control system (1), in particular for a vehicle (200), said pressure control system having a single-stage or multi-stage compressor (4) as a pneumatic consumer to perform the method according to one of the preceding claims,
wherein the single-stage or multi-stage compressor (4) comprises at least one compression stage (6) so as to provide the compressed pressure medium (L3),
wherein at least one pressure medium chamber (3.i; i=1...4) that may be flow-connected at least to one of the compression stages (5, 6) and/or a pressure medium storage device (20) that may be flow-connected to at least one of the compression stages (5, 6) is provided so as to store the compressed pressure medium (L3), and a charging line (23) is provided that connects the pressure medium storage device (20) and/or the at least one pressure medium chamber (3.i) to at least one of the compression stages (5, 6) so as to convey a pressure medium (L4) that is stored in the pressure medium storage device (20) or a chamber pressure medium (L5) that is used in the pressure medium chambers (3.i) as a charging pressure medium (A) into at least one of the compression stages (5, 6) of the single-stage or multi-stage compressor (4),
**characterized in that**
a pneumatically controllable flow-control valve (25a; 25b) is arranged in the charging line (23), wherein the flow-control cross-section (DQ) or the average flow-control cross-section (DQ_avg) of the respective flow-control valve (25a, 25b) may be adjusted in a continuously variable manner in a pneumatically controlled manner so as to limit the charging volume flow (QA) of the charging pressure medium (A) to the limit volume flow (QG) in a continuously variable manner, wherein the pneumatically controllable flow-control valve (25a) is connected via a pneumatic control input (26a) to the charging line (23) and/or to an outlet line (16) that is conveying the compressed pressure medium (L3) or to a difference pressure controller (24) so as to predetermine the corresponding admission pressure (pV) and/or admission volume flow (QV),
wherein the difference pressure controller (24) outputs as an admission pressure (pV) the difference pressure (pDiff) between the charging pressure (pA) and the compression pressure (p3).

5. Pressure control system (1) according to Claim 4, **characterized in that** the pressure control system is an air spring system (1).

6. Pressure control system (1) according to either of Claims 4 and 5, **characterized in that** the flow-control cross-section (DQ) may be adjusted via a flow-control piston (27) that may be actuated pneumatically in dependence upon the admission pressure (pV) and/or upon the admission volume flow (QV).

7. Pressure control system (1) according to Claim 6, **characterized in that** the flow-control piston (27) is operatively connected to a control piston (29), wherein the control piston (29) may be adjusted in dependence upon the charging pressure (pA) and upon the compression pressure (p3) as an admission pressure (pV) in such a manner that the flow-control cross-section (DQ) may be adjusted via the flow-control piston (27) in dependence upon the difference pressure (pDiff) between the charging pressure (pA) and the compression pressure (p3).

8. Vehicle (200), in particular passenger car (200), having a pressure control system (1) according to one of Claims 4 to 7.

## Revendications

1. Procédé permettant de faire fonctionner un système de régulation de pression (1) dans un véhicule (200), comprenant au moins les étapes suivantes consistant à :
- piloter une soupape d'étranglement (25a ; 25b) dans une conduite de suralimentation (23) transférant un fluide sous pression de suralimentation (A), en fonction d'une pression d'admission (pV) et/ou d'un débit volumétrique d'admission (QV), la pression d'admission (pV) et/ou le débit volumétrique d'admission (QV) caractérisant (St1) une charge actuelle ou à attendre actuellement d'un consommateur pneumatique (4), sous la forme d'un compresseur (4) à un ou plusieurs étages, du système de régulation de pression (1) lorsque le fluide sous pression de suralimentation (A) est amené avec un débit volumétrique de suralimentation (QA) et une pression de suralimentation (pA) dans le consommateur pneumatique (4) ;
- régler une section transversale d'étranglement (DQ) ou une section transversale d'étranglement moyenne (DQ_avg) agissant sur le fluide sous pression de suralimentation (A) lors du passage par la soupape d'étranglement (25a ; 25b) afin de limiter le débit volumétrique de suralimentation (QA) à un débit volumétrique limite (QG), la section transversale d'étranglement (DQ) ou la section transversale d'étranglement moyenne (DQ_avg) étant réglée (St2, St2.1, St2.2, St2.3) en continu en fonction de la pression d'admission (pV) et/ou du débit volumétrique d'admission (QV) ; et
- distribuer (St3) le fluide sous pression de suralimentation (A) limité en débit volumétrique (QG) au consommateur pneumatique (4),
**caractérisé en ce que** le pilotage de la soupape d'étranglement (25a) est effectué de manière pneumatique, dans lequel à cet effet une soupape d'étranglement (25a) à commande pneumatique est pilotée par une entrée de commande pneumatique (26a) par la pression d'admission (pV) et/ou le débit volumétrique d'admission (QV), et la soupape d'étranglement pneumatique (25a) modifie en continu sa section transversale d'étranglement (DQ) en fonction de la pression d'admission (pV) et/ou du débit volumétrique d'admission (QV) amenés de manière pneumatique afin de limiter en continu le débit volumétrique de suralimentation (QA) au débit volumétrique limite (QG), et dans lequel
- la pression d'admission (pV) est spécifiée par la pression de suralimentation (pA) du fluide sous pression de suralimentation (A) et/ou une pression de compression (p3) d'un fluide sous pression comprimé (L3) sortant du consommateur pneumatique (4) ou par une pression différentielle (pDiff) de la pression de suralimentation (pA) et de la pression de compression (p3), et
- le débit volumétrique d'admission (QV) est spécifié par le débit volumétrique de suralimentation (QA) du fluide sous pression de suralimentation (A) et/ou par un débit volumétrique de compression (Q3) du fluide sous pression comprimé (L3) sortant du consommateur pneumatique (4).

2. Procédé selon la revendication 1, **caractérisé en ce que** la section transversale d'étranglement (DQ) ou la section transversale d'étranglement moyenne (DQ_avg) de la soupape d'étranglement (25a ; 25b) respective est réglée de telle sorte que la pression différentielle (pDiff) est maintenue à une valeur de différence constante (WDiff).

3. Procédé selon la revendication 1 ou 2, **caractérisé en ce que** la section transversale d'étranglement (DQ) ou la section transversale d'étranglement moyenne (DQ_avg) de la soupape d'étranglement (25a ; 25b) respective est réglée en continu de telle sorte que pour une pression de suralimentation (pA) accrue et/ou un débit volumétrique de suralimentation (QA) accru ou une pression de compression (p3) accrue et/ou un débit volumétrique de compression (Q3) accru, la section transversale d'étranglement (DQ) ou la section transversale d'étranglement moyenne (DQ_avg) est réduite en continu pour une limitation en continu de la puissance absorbée du consommateur pneumatique (4).

4. Système de régulation de pression (1), en particulier pour un véhicule (200), comprenant un compresseur (4) à un ou plusieurs étages comme consommateur pneumatique pour effectuer le procédé selon l'une quelconque des revendications précédentes,
dans lequel le compresseur (4) à un ou plusieurs étages présente au moins un étage de compression (6) pour fournir le fluide sous pression comprimé (L3),
dans lequel au moins une chambre à fluide sous pression (3.i ; i = 1 ... 4) pouvant être mise en communication fluidique avec au moins l'un des étages de compression, et/ou un réservoir de fluide sous pression (20) pouvant être mis en communication fluidique avec au moins l'un des étages de compression (5, 6) pour stocker le fluide sous pression comprimé (L3) sont prévus, et
une conduite de suralimentation (23) est prévue qui relie le réservoir de fluide sous pression (20) et/ou ladite au moins une chambre à fluide sous pression (3.i) à au moins l'un des étages de compression (5, 6) pour débiter un fluide sous pression (L4) stocké dans le réservoir de fluide sous pression (20) ou un fluide sous pression de chambre (L5) utilisé dans les chambres à fluide sous pression (3.i) comme fluide de pression de suralimentation (A) dans au moins l'un des étages de compression (5, 6) du compresseur (4) à un ou plusieurs étages,
**caractérisé en ce qu'**une soupape d'étranglement (25a ; 25b) à commande pneumatique est disposée dans la conduite de suralimentation (23), la section transversale d'étranglement (DQ) ou la section transversale d'étranglement moyenne (DQ_avg) de la soupape d'étranglement (25a ; 25b) respective étant réglable en continu par commande pneumatique afin de limiter en continu le débit volumétrique de suralimentation (QA) du fluide sous pression de suralimentation (A) au débit volumétrique limite (QG), dans lequel la soupape d'étranglement (25a) à commande pneumatique est reliée par une entrée de commande pneumatique (26a) à la conduite de suralimentation (23) et/ou à une conduite de sortie (16) débitant le fluide sous pression comprimé (L3) ou à un régulateur de pression différentielle (24) pour spécifier la pression d'admission (pV) et/ou le débit volumétrique d'admission (QV) correspondants, le régulateur de pression différentielle (24) distribuant comme pression d'admission (pV) la pression différentielle (pDiff) entre la pression de suralimentation (pA) et la pression de compression (p3).

5. Système de régulation de pression (1) selon la revendication 4, **caractérisé en ce que** le système de régulation de pression est une suspension pneumatique (1) .

6. Système de régulation de pression (1) selon l'une quelconque des revendications 4 et 5, **caractérisé en ce que** la section transversale d'étranglement (DQ) est réglable par un piston d'étranglement (27) pouvant être actionné de manière pneumatique en fonction de la pression d'admission (pV) et/ou du débit volumétrique d'admission (QV).

7. Système de régulation de pression (1) selon la revendication 6, **caractérisé en ce que** le piston d'étranglement (27) est en relation active avec un piston de régulation (29), le piston de régulation (29) étant réglable en fonction de la pression de suralimentation (pA) et de la pression de compression (p3) comme pression d'admission (pV) de telle sorte que la section transversale d'étranglement (DQ) est réglable par le piston d'étranglement (27) en fonction de la pression différentielle (pDiff) entre la pression de suralimentation (pA) et la pression de compression (p3).

8. Véhicule (200), en particulier voiture particulière (200), comprenant un système de régulation de pression (1) selon l'une quelconque des revendications 4 à 7.
